# EUROPEAN PATENT APPLICATION

(11) **EP 4 765 626 A1**
(43) Date of publication of application: **24.06.2026**
(21) Application number: 24918201.5
(22) Date of filing: 14.11.2024
(51) Int. Cl.: H02S 20/23

(54) **MOUNTING ASSEMBLY, PHOTOVOLTAIC MODULE, AND PHOTOVOLTAIC DEVICE**

(30) Priority: 19.01.2024 CN 202410083393; 24.07.2024 CN 202411000577; 10.10.2024 CN 202422449401 U
(71) Applicant: Shenzhen Hello Tech Energy Co., Ltd, Shenzhen, Guangdong 518109 (CN)
(72) Inventor: LAI, Huilong, Shenzhen, Guangdong 518109 (CN); SUN, Zhongwei, Shenzhen, Guangdong 518109 (CN); YU, Huajun, Shenzhen, Guangdong 518109 (CN); ZHU, Yanjun, Shenzhen, Guangdong 518109 (CN); ZHANG, Minhuan, Shenzhen, Guangdong 518109 (CN); LIU, Hui, Shenzhen, Guangdong 518109 (CN)
(74) Representative: Dehns Germany Partnerschaft mbB
(86) International application number: PCT/CN2024/131983
(87) International publication number: WO 2025/152592

(57) **Abstract**

A photovoltaic module (100) comprises: a photovoltaic member (110) having a first side edge (112), a second side edge (114), a third side edge (116), and a fourth side edge (118); and a first mounting base (130) and a second mounting base (140), wherein the second mounting base is provided with a mounting slot (142) and the first mounting base is arranged on the first side edge (112). The first mounting base (130) can be inserted into the mounting slot (142) in the direction from the fourth side edge (118) to the first side edge (112), and exit the mounting slot (142) in the direction from the first side edge (112) to the fourth side edge (118).

## Description

This application claims priority and benefit from Chinese Patent Applications No. 202410083393.0 filed with China National Intellectual Property Administration on January 19, 2024, No. 202411000577.2 filed with China National Intellectual Property Administration on July 24, 2024, No. 202422449401.7, filed with China National Intellectual Property Administration on October 10, 2024, which are incorporated herein by reference in their entireties.

### FIELD

The present disclosure relates to the field of solar cell technologies, and more particularly, to a mounting assembly, a photovoltaic assembly, and a photovoltaic device.

### BACKGROUND

In the related art, to ensure a waterproof performance of a roof, photovoltaic tiles need to be stacked one by one, resulting in inconvenient maintenance of the photovoltaic tiles, and the replacement of a certain tile can be completed only when the whole row or column of tiles are disassembled.

### SUMMARY

The present disclosure aims to at least solve or improve a technical problem of inconvenient maintenance of a photovoltaic assembly in the related art.

To this end, the present disclosure provides a photovoltaic assembly, a mounting assembly, and a photovoltaic device.

In view of this, the photovoltaic assembly of the present disclosure includes a photovoltaic member, a first mounting base, and a second mounting base. The photovoltaic member includes a first side edge, a second side edge, a third side edge, and a fourth side edge. The second side edge and the third side edge are a pair of opposite side edges of the photovoltaic member. The first side edge and the fourth side edge are another pair of opposite side edges of the photovoltaic member. The first side edge is connected to one same side of the second side edge and the third side edge. The fourth side edge is connected to another same side of the second side edge and the third side edge. The first mounting base is disposed at the photovoltaic member and is located at the first side edge. The second mounting base has a mounting groove. The first mounting base is capable of being inserted into the mounting groove in a direction from the fourth side edge to the first side edge and being withdrawn from the mounting groove in a direction from the first side edge to the fourth side edge. The second mounting base is detachably engaged with the first mounting base and configured to fix the photovoltaic assembly.

The photovoltaic device of the present disclosure includes at least one keel and at least one photovoltaic assembly described above. Each of the at least one photovoltaic assembly includes a photovoltaic member, a first mounting base, and a second mounting base. The photovoltaic member includes a first side edge, a second side edge, a third side edge, and a fourth side edge. The second side edge and the third side edge are a pair of opposite side edges of the photovoltaic member. The first side edge and the fourth side edge are another pair of opposite side edges of the photovoltaic member. The first side edge is connected to one same side of the second side edge and the third side edge. The fourth side edge is connected to another same side of the second side edge and the third side edge. The first mounting base is disposed at the photovoltaic member and is located at the first side edge. The second mounting base has a mounting groove. The first mounting base is capable of being inserted into the mounting groove in a direction from the fourth side edge to the first side edge and being withdrawn from the mounting groove in a direction from the first side edge to the fourth side edge. The second mounting base is detachably engaged with the first mounting base and configured to fix the photovoltaic assembly. The second mounting base of the photovoltaic assembly is connected to the keel.

In the photovoltaic device and the photovoltaic assembly provided in the present disclosure, the photovoltaic assembly includes the photovoltaic member, the first mounting base, and the second mounting base. The photovoltaic member includes the first side edge, the second side edge, the third side edge, and the fourth side edge. The second side edge and the third side edge are a pair of opposite side edges of the photovoltaic member. The first side edge is located at one side of the second side edge and the third side edge, and the fourth side edge is located at another side of the second side edge and the third side edge. That is, the first side edge and the fourth side edge are respectively located at two opposite sides of the second side edge and the third side edge. The first side edge and the fourth side edge are another pair of opposite side edges of the photovoltaic member. The first mounting base is disposed at the first side edge. The second mounting base and the first mounting base can be detachably engaged with each other. The second mounting base can be engaged with the keel to fix the photovoltaic assembly on the keel. When a plurality of photovoltaic assemblies is mounted at the keel, the second mounting base does not need to be disassembled, only the first mounting base and the second mounting base need to be disassembled.

In addition, the second mounting base includes the mounting groove. The first mounting base is detachably inserted into the mounting groove, thereby improving the reliability of the first mounting base and the second mounting base. When two photovoltaic assemblies are engaged with each other in the direction from the first side edge to the fourth side edge, one photovoltaic assembly overlaps with the other photovoltaic assembly. Therefore, the first mounting base can be withdrawn from the mounting groove in the direction from the first side edge to the fourth side edge, and the first mounting base can be inserted into the mounting groove in the direction from the fourth side edge to the first side edge, thereby facilitating disassembly of the photovoltaic assembly and facilitating repair and maintenance of the photovoltaic assembly.

After the plurality of photovoltaic assemblies is distributed and mounted in an array structure, when one photovoltaic assembly needs to be disassembled, the first mounting base and the second mounting base can be disassembled to separately disassemble one photovoltaic assembly, thereby facilitating the repair and maintenance of the photovoltaic assembly.

The mounting assembly of the present disclosure includes a mounting base, a connector, and a fastener. The mounting base is configured to mount a photovoltaic member. The mounting base has a mounting hole and an avoidance hole. The mounting hole is in communication with the avoidance hole. The connector includes a pressing arm configured to press and cover another photovoltaic member. The fastener is disposed in the mounting hole and passes through the avoidance hole. The avoidance hole is configured to avoid the fastener. The fastener is configured to fix the connector on the mounting base.

The photovoltaic device of the present disclosure includes the photovoltaic member and the mounting assembly. The photovoltaic member is mounted on the mounting assembly. The mounting assembly includes the mounting base, the connector, and the fastener. The mounting base is configured to mount the photovoltaic member. The mounting base has the mounting hole and the avoidance hole. The mounting hole is in communication with the avoidance hole. The connector includes the pressing arm configured to press and cover another photovoltaic member. The fastener is disposed in the mounting hole and passes through the avoidance hole. The avoidance hole is configured to avoid the fastener. The fastener is configured to fix the connector on the mounting base.

In the present disclosure, the mounting assembly includes the mounting base, the connector, and the fastener. The fastener is configured to fix the connector on the mounting base. The mounting base can be provided with a photovoltaic member. The connector includes the pressing arm configured to press and cover another photovoltaic member. After a plurality of photovoltaic members is mounted, fixing of front and rear edges can be formed, thereby improving the stability of the photovoltaic member and windproof performance of the photovoltaic member. The mounting base has the mounting hole and the avoidance hole. The mounting hole is in communication with the avoidance hole. The fastener is disposed in the mounting hole and passes through the avoidance hole. The avoidance hole can avoid the fastener, that is, the avoidance hole does not need to be threaded, thereby reducing the threading depth of the mounting base, lowering the processing difficulty of the mounting assembly, and reducing the production cost.

Additional aspects and advantages of the present disclosure will become apparent from the following description, or can be learned from practicing of the present disclosure.

### BRIEF DESCRIPTION OF THE DRAWINGS

The above and/or additional aspects and advantages of the present disclosure will become apparent and more understandable from the following description of embodiments taken in conjunction with the accompanying drawings.
FIG. 1 shows a schematic structural view of a photovoltaic assembly according to an embodiment of the present disclosure.
FIG. 2 shows a sectional view of the photovoltaic assembly shown in FIG. 1 along a direction A-A.
FIG. 3 shows a sectional view of a second mounting base in a photovoltaic assembly according to an embodiment of the present disclosure.
FIG. 4 shows a sectional view of the photovoltaic assembly shown in FIG. 1 along a direction B-B.
FIG. 5 shows a sectional view of the photovoltaic assembly shown in FIG. 1 along a direction C-C.
FIG. 6 shows an enlarged partial view of part D of the photovoltaic assembly shown in FIG. 5.
FIG. 7 shows an enlarged partial view of part E of the photovoltaic assembly shown in FIG. 5.
FIG. 8 shows a schematic structural view of a photovoltaic device according to an embodiment of the present disclosure.
FIG. 9 shows an exploded view of two photovoltaic assemblies in a photovoltaic device according to an embodiment of the present disclosure.
FIG. 10 is a schematic structural view showing an engagement of two photovoltaic assemblies in a photovoltaic device according to an embodiment of the present disclosure.
FIG. 11 shows an exploded view illustrating an engagement of two photovoltaic assemblies in a photovoltaic device according to an embodiment of the present disclosure.
FIG. 12 shows a schematic structural view of a photovoltaic assembly according to another embodiment of the present disclosure.
FIG. 13 shows a sectional view of the photovoltaic assembly shown in FIG. 12 along a direction A1-A1.
FIG. 14 shows a sectional view of a partial structure of a photovoltaic assembly according to an embodiment of the present disclosure.
FIG. 15 shows a schematic structural view of a photovoltaic assembly according to another embodiment of the present disclosure.
FIG. 16 shows a sectional view of the photovoltaic assembly shown in FIG. 15 along a direction A2-A2.
FIG. 17 shows a sectional view of a partial structure of a photovoltaic assembly according to an embodiment of the present disclosure.
FIG. 18 shows a schematic structural view of a second mounting base in a photovoltaic assembly according to an embodiment of the present disclosure.
FIG. 19 shows a schematic structural view of a photovoltaic device according to an embodiment of the present disclosure.
FIG. 20 shows an exploded view illustrating an engagement of a part of photovoltaic assemblies in a photovoltaic device according to an embodiment of the present disclosure.
FIG. 21 shows a schematic structural view of a mounting assembly according to an embodiment of the present disclosure.
FIG. 22 shows a sectional view of a mounting assembly according to an embodiment of the present disclosure.
FIG. 23 shows a sectional view of a first mounting base and a second mounting base in a mounting assembly according to an embodiment of the present disclosure.
FIG. 24 shows a sectional view of a first mounting base in a mounting assembly according to an embodiment of the present disclosure.
FIG. 25 shows a schematic structural view of a first mounting base and a fastener in a mounting assembly according to an embodiment of the present disclosure.
FIG. 26 shows a first schematic structural view of a photovoltaic device according to an embodiment of the present disclosure.
FIG. 27 shows a second schematic structural view of a photovoltaic device according to an embodiment of the present disclosure.
FIG. 28 shows a third schematic structural view of a photovoltaic device according to an embodiment of the present disclosure.
FIG. 29 shows a fourth schematic structural view of a photovoltaic device according to an embodiment of the present disclosure.

### DETAILED DESCRIPTION OF THE EMBODIMENTS

To better understand the above objects, features, and advantages of the present disclosure, the present disclosure is further described in detail below in conjunction with the accompanying drawings and specific embodiments. It should be noted that the embodiments of the present disclosure and the features in the embodiments can be combined with each other without conflict.

In the following description, many specific details are provided to facilitate a full understanding of the present disclosure. However, the present disclosure may be embodied in other ways than as described herein. Therefore, the protection scope of the present disclosure is not limited by the specific embodiments disclosed below.

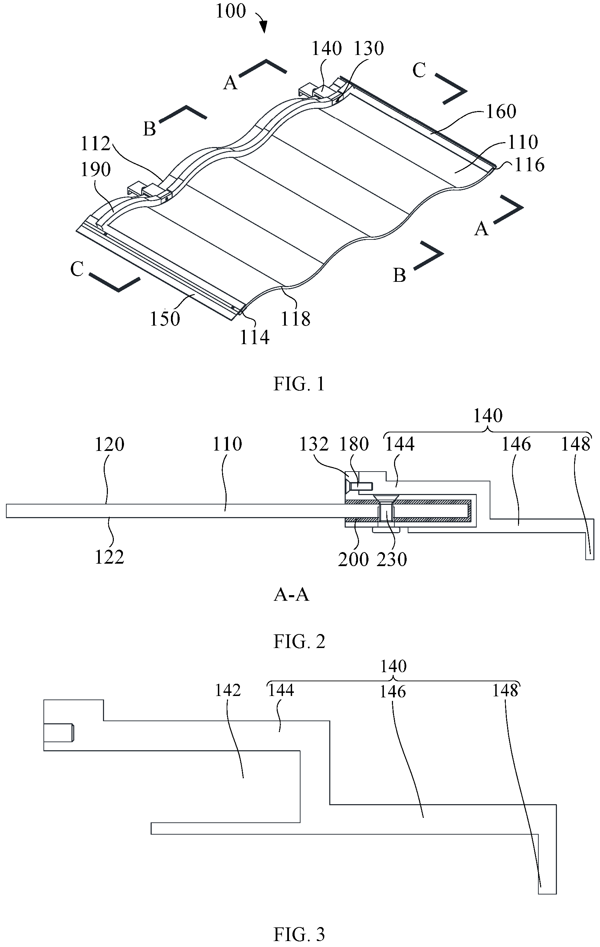

As shown in FIG. 1, FIG. 2, and FIG. 3, a first aspect of the present disclosure provides a photovoltaic assembly 100. The photovoltaic assembly 100 includes a photovoltaic member 110, a first mounting base 130, and a second mounting base 140. The photovoltaic member 110 includes a first side edge 112, a second side edge 114, a third side edge 116, and a fourth side edge 118. The second side edge 114 and the third side edge 116 are a pair of opposite side edges of the photovoltaic member 110. The first side edge 112 and the fourth side edge 118 are another pair of opposite side edges of the photovoltaic member 110. The first side edge 112 is connected to one same side of the second side edge 114 and the third side edge 116. The fourth side edge 118 is connected to another same side of the second side edge 114 and the third side edge 116. The first mounting base 130 is disposed at the photovoltaic member 110 and located at the first side edge 112. The second mounting base 140 is detachably engaged with the first mounting base 130 and configured to fix the photovoltaic assembly 100. The second mounting base 140 includes a mounting groove 142. The first mounting base 130 is detachably inserted into the mounting groove 142. The first mounting base 130 is capable of being withdrawn from the mounting groove 142 in a direction from the first side edge 112 to the fourth side edge 118 (forward of a width direction of the photovoltaic assembly 100). The first mounting base 130 is capable of being inserted into the mounting groove 142 in a direction from the fourth side edge 118 to the first side edge 112 (reverse of the width direction of the photovoltaic assembly 100).

The photovoltaic assembly 100 according to the present disclosure includes the photovoltaic member 110, the first mounting base 130, and the second mounting base 140. The photovoltaic member 110 includes the first side edge 112, the second side edge 114, the third side edge 116, and the fourth side edge 118. The second side edge 114 and the third side edge 116 are a pair of opposite side edges of the photovoltaic member 110. The first side edge 112 and the fourth side edge 118 are another pair of opposite side edges of the photovoltaic member 110. The first side edge 112 and the fourth side edge 118 are respectively located at opposite sides of the second side edge 114 and the third side edge 116. The first mounting base 130 is disposed at the first side edge 112. The second mounting base 140 and the first mounting base 130 can form a detachable engagement. The second mounting base 140 can engage with a keel 310 to fix the photovoltaic assembly 100 to the keel 310. When a plurality of photovoltaic assemblies 100 are mounted at the keel 310, the second mounting base 140 does not need to be disassembled, and only the first mounting base 130 and the second mounting base 140 need to be disassembled.

Further, the second mounting base 140 has the mounting groove 142. The first mounting base 130 is detachably inserted into the mounting groove 142, thereby improving the mounting reliability of the first mounting base 130 and the second mounting base 140. The photovoltaic member 110 includes the fourth side edge 118. The fourth side edge 118 and the first side edge 112 are a pair of opposite side edges of the photovoltaic member 110. When two photovoltaic assemblies 100 engage with each other in the direction from the first side edge 112 to the fourth side edge 118, one photovoltaic assembly 100 overlaps the other photovoltaic assembly 100. Therefore, the first mounting base 130 can be withdrawn from the mounting groove 142 in the direction from the first side edge 112 to the fourth side edge 118, and the first mounting base 130 can be inserted into the mounting groove 142 in the direction from the fourth side edge 118 to the first side edge 112 to facilitate disassembly of the photovoltaic assembly 100, thereby facilitating maintenance and repair of the photovoltaic assembly 100.

After a plurality of photovoltaic assemblies 100 is distributed and mounted in an array structure, if one photovoltaic assembly 100 is to be disassembled, the first mounting base 130 and the second mounting base 140 can be disassembled, so that one photovoltaic assembly 100 can be disassembled separately, thereby facilitating the maintenance and repair of the photovoltaic assembly 100.

The number of the first mounting bases 130 and the number of the second mounting bases 140 may be one or more, and the first mounting base 130 is partially engaged with the first side edge 112 of the photovoltaic member 110.

As shown in FIG. 2, in some embodiments, the first mounting base 130 includes a protrusion 132. The protrusion 132 and the second mounting base 140 are distributed in the direction from the fourth side edge 118 to the first side edge 112. The photovoltaic assembly 100 further includes a first screw 180. The protrusion 132 and the second mounting base 140 are engaged with each other through the first screw 180.

In this embodiment, the first mounting base 130 includes the protrusion 132. The protrusion 132 and the second mounting base 140 are distributed in the direction from the fourth side edge 118 to the first side edge 112. The photovoltaic assembly 100 further includes the first screw 180. The first screw 180 passes through the protrusion 132 and then is screwed to the second mounting base 140. Thus, the first screw 180 can withdraw from the second mounting base 140 in the direction from the first side edge 112 to the fourth side edge 118. In addition, the first screw 180 can be screwed into the second mounting base 140 in the direction from the fourth side edge 118 to the first side edge 112. Since one photovoltaic assembly 100 overlaps the first mounting base 130 of the other photovoltaic assembly 100 when the two photovoltaic assemblies 100 are engaged with each other in the direction from the first side edge 112 to the fourth side edge 118, the first screw 180 engages with the second mounting base 140 through the protrusion 132, which facilitates screwing in and out of the first screw 180, thereby facilitating the maintenance and repair of the photovoltaic assembly 100.

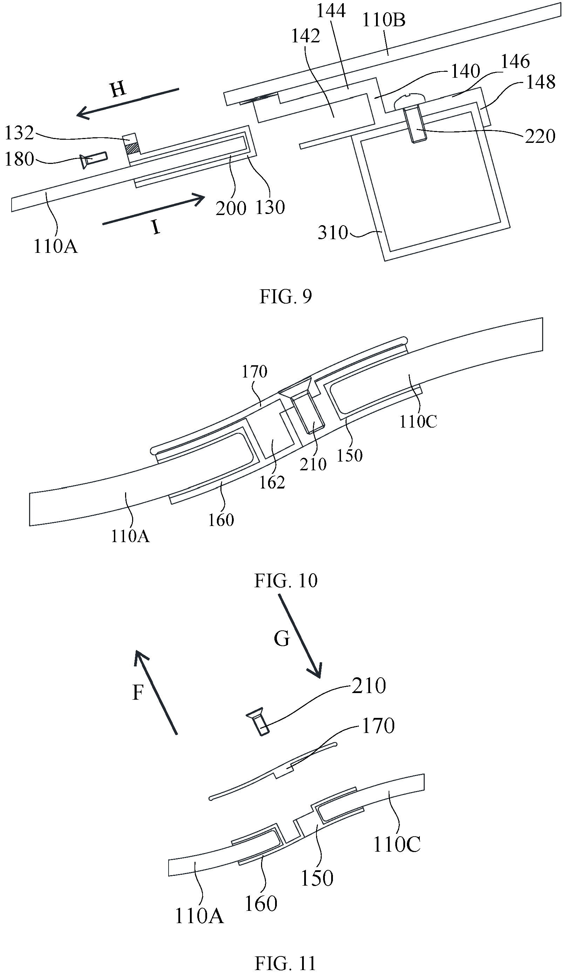

In an exemplary embodiment of the present disclosure, as shown in FIG. 9, when a photovoltaic member 110B of one photovoltaic assembly 100 is pressed against another photovoltaic assembly 100, the first screw 180 can withdraw from the second mounting base 140 in a direction H from the first side edge 112 to the fourth side edge 118, and the first screw 180 can be screwed into the second mounting base 140 in a direction I from the fourth side edge 118 to the first side edge 112. After the first screw 180 is disassembled, the first mounting base 130 can withdraw from the mounting groove 142 of the second mounting base 140 in the direction H from the first side edge 112 to the fourth side edge 118, and the first mounting base 130 can be inserted into the mounting groove 142 of the second mounting base 140 in the direction I from the fourth side edge 118 to the first side edge 112. In such a disassembly mode, there is no need to adjust the photovoltaic member 110B, which facilitates an independent disassembly and maintenance of the photovoltaic assembly 100.

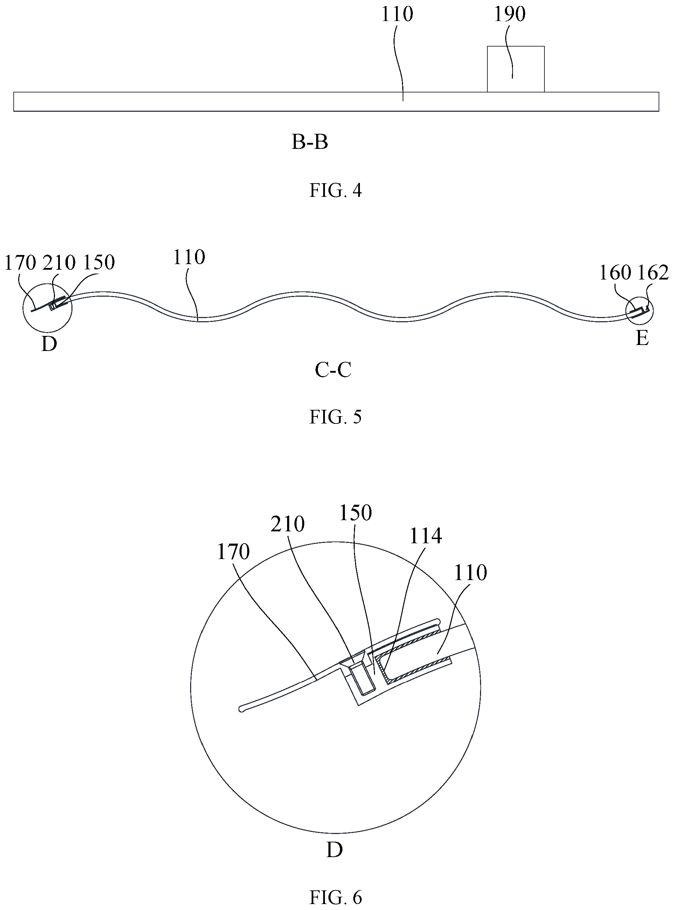

As shown in FIG. 1 and FIG. 4, in some embodiments, the photovoltaic assembly 100 further includes a waterproof member 190 disposed at a light-receiving side 120 of the photovoltaic member 110. The waterproof member 190 and the first mounting base 130 are arranged side by side in a length direction of the photovoltaic member 110. The waterproof member 190 is located at a level higher than or same as the protrusion 132. When two photovoltaic assemblies 100 are engaged with each other in the direction from the first side edge 112 to the fourth side edge 118. The photovoltaic member 110 of one photovoltaic assembly 100 presses and covers the waterproof member 190 of the other photovoltaic assembly 100.

In this embodiment, the photovoltaic assembly 100 further includes the waterproof member 190 disposed at the light-receiving side 120 of the photovoltaic member 110. The waterproof member 190 and the first mounting base 130 are arranged side by side in the length direction of the photovoltaic member 110. The waterproof member 190 is located at a level higher than or same as the protrusion 132. Since when the two photovoltaic assemblies 100 are engaged with each other in the direction from the first side edge 112 to the fourth side edge 118, one photovoltaic assembly 100 overlaps the waterproof member 190 of the other photovoltaic assembly 100, thereby improving the waterproof property between one photovoltaic assembly 100 and the other photovoltaic assembly 100 and further reducing the possibility of damage of the overlapped photovoltaic assemblies 100.

In an exemplary embodiment of the present disclosure, the waterproof member 190 is a flexible waterproof member 190, such as a rubber waterproof member 190 or a silicone waterproof member 190.

One or more waterproof members 190 may be provided. A plurality of waterproof members 190 may be alternately distributed with the first mounting base 130 in the length direction of the photovoltaic member 110. Alternatively, one or more waterproof members 190 may be arranged at a side of the first mounting base 130 towards the fourth side edge 118 in a width direction of the photovoltaic member 110.

As shown in FIG. 2 and FIG. 3, in some embodiments, the second mounting base 140 includes a base body 144, an extension portion 146, and a hook portion 148. The base body 144 is detachably connected to the first mounting base 130. The extension portion 146 is disposed at a side of the base body 144 away from the photovoltaic member 110 and configured to fix the photovoltaic assembly 100. The hook portion 148 is disposed at the extension portion 146 and protrudes towards a backlight surface 122 of the photovoltaic member 110.

In this embodiment, the second mounting base 140 includes the base body 144, the extension portion 146, and the hook portion 148. The base body 144 and the mounting base are detachably engaged with each other. The extension portion 146 is disposed at the side of the base body 144 away from the photovoltaic member 110 and configured to fix the photovoltaic assembly 100. The second mounting base 140 can be mounted and fixed to the keel 310 by other fittings such as a third screw 220, rivets or inserts. The extension portion 146 is provided with the hook portion 148 configured to clamp the keel 310, thereby enhancing the stability of the photovoltaic assembly 100 after mounting.

In an exemplary embodiment of the present disclosure, as shown in FIG. 9, the third screw 220 passes through the extension portion 146 and is screwed to the keel 310, and the hook portion 148 can clamp the keel 310 to facilitate positioning of the photovoltaic assembly 100. In this way, a plurality of photovoltaic assemblies 100 is arranged horizontally on the same horizontal line, facilitating the mounting of the photovoltaic assemblies 100.

As shown in FIG. 2, in some embodiments, the photovoltaic assembly 100 further includes a flexible gasket 200 arranged between the photovoltaic member 110 and the first mounting base 130. The photovoltaic member 110 is embedded into the first mounting base 130.

In this embodiment, the photovoltaic assembly 100 further includes the flexible gasket 200 arranged between the photovoltaic member 110 and the first mounting base 130, and the photovoltaic member 110 is embedded into the first mounting base 130, thereby providing buffer protection using the flexible gasket 200 to reduce the possibility of damage to the photovoltaic member 110.

The flexible gasket 200 may be made of rubber or silicone.

As shown in FIG. 1 and FIG. 5, in some embodiments, the photovoltaic assembly 100 further includes a first overlapping member 150, a second overlapping member 160, and a pressing plate 170. The first overlapping member 150 is disposed at the photovoltaic member 110 and located at the second side edge 114. The second overlapping member 160 is disposed at the photovoltaic member 110 and located at the third side edge 116. The pressing plate 170 is detachably disposed at the first overlapping member 150. When two photovoltaic assemblies 100 are engaged with each other in a direction from the second side edge 114 to the third side edge 116 (the length direction of the photovoltaic assembly 100), the pressing plate 170 of one photovoltaic assembly 100 presses and covers the second overlapping member 160 of the other photovoltaic assembly 100.

In this embodiment, the photovoltaic assembly 100 further includes the first overlapping member 150, the second overlapping member 160, and the pressing plate 170. The first overlapping member 150 is disposed at the second side edge 114 of the photovoltaic member 110. The second overlapping member 160 is disposed at the third side edge 116 of the photovoltaic member 110. The pressing plate 170 is detachably disposed at the first overlapping member 150. When two photovoltaic assemblies 100 are engaged with each other in the direction from the second side edge 114 to the third side edge 116, the pressing plate 170 of one photovoltaic assembly 100 presses and covers the second overlapping member 160 of the other photovoltaic assembly 100. Therefore, the waterproof performance of the plurality of photovoltaic assemblies 100 after engagement can be improved by the pressing plate 170, and the reliability of the plurality of photovoltaic assemblies 100 after engagement can also be improved.

In an exemplary embodiment of the present disclosure, the first overlapping member 150 can engage with the entire second side edge 114, and the second overlapping member 160 can engage with the entire third side edge 116.

After the plurality of photovoltaic assemblies 100 is distributed and mounted in an array structure, if one photovoltaic assembly 100 is to be disassembled, the first mounting base 130 and the second mounting base 140 can be disassembled, and the pressing plate 170 of the other photovoltaic assembly 100 can be disassembled, so that one photovoltaic assembly 100 can be disassembled independently, thereby facilitating the maintenance and repair of the photovoltaic assembly 100.

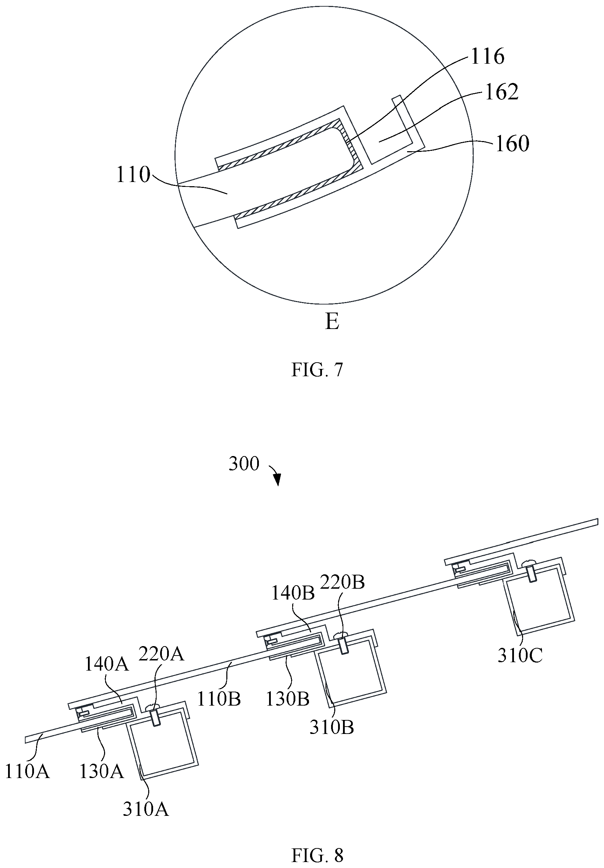

As shown in FIG. 5 and FIG. 7, in some embodiments, the second overlapping member 160 includes a flow guiding groove 162. The pressing plate 170 of one photovoltaic assembly 100 presses and covers the flow guiding groove 162 of the other photovoltaic assembly 100 when two photovoltaic assemblies 100 are engaged with each other in the direction from the second side edge 114 to the third side edge 116.

In this embodiment, the second overlapping member 160 includes the flow guiding groove 162. When two photovoltaic assemblies 100 are engaged with each other in the direction from the second side edge 114 to the third side edge 116, the pressing plate 170 of one photovoltaic assembly 100 presses and covers the flow guiding groove 162 of the other photovoltaic assembly 100. Since adjacent photovoltaic assemblies 100 may be penetrated by liquid such as rainwater, the flow guiding groove 162 is formed to guide the flow, thereby improving the waterproof effect of the photovoltaic assembly 100.

In an exemplary embodiment of the present disclosure, as shown in FIG. 10, the second overlapping member 160 is disposed at the third side edge 116 of the photovoltaic member 110A of one photovoltaic assembly 100, and the first overlapping member 150 is disposed at the second side edge 114 of the photovoltaic member 110C of the other photovoltaic assembly 100. The pressing plate 170 on the first overlapping member 150 presses and covers the second overlapping member 160 of the other photovoltaic assembly 100 and covers the flow guiding groove 162.

The pressing plate 170 shields the first overlapping member 150 and the second overlapping member 160, and has good waterproof performance. A small amount of water can be discharged through the flow guiding groove 162 on the second overlapping member 160, further improving the waterproof performance of the photovoltaic assembly 100.

The flow guiding groove 162 guides flow in the direction from the first side edge 112 to the fourth side edge 118.

As shown in FIG. 6, in some embodiments, the photovoltaic assembly 100 further includes a second screw 210. The first overlapping member 150 and the pressing plate 170 are connected to and engaged with each other through the second screw 210.

In this embodiment, the photovoltaic assembly 100 further includes the second screw 210, and the first overlapping member 150 and the pressing plate 170 are connected to and engaged with each other through the second screw 210, thereby reducing the difficulty of mounting between the first overlapping member 150 and the pressing plate 170.

In an exemplary embodiment of the present disclosure, as shown in FIG. 11, the second overlapping member 160 is disposed at the third side edge 116 of the photovoltaic member 110A of one photovoltaic assembly 100, and the first overlapping member 150 is disposed at the second side edge 114 of the photovoltaic member 110C of the other photovoltaic assembly 100. The pressing plate 170 on the first overlapping member 150 presses and covers the second overlapping member 160 of the other photovoltaic assembly 100. The second screw 210 can be withdrawn from the first overlapping member 150 in a direction F away from the first overlapping member 150, and the second screw 210 can be screwed into the first overlapping member 150 in a direction G towards the first overlapping member 150. Therefore, when it is necessary to disassemble the photovoltaic assembly 100, the pressing plate 170 pressed thereon may be disassembled, thereby enabling the removal of one photovoltaic assembly 100 alone.

As shown in FIG. 5, FIG. 6, and FIG. 7, in some embodiments, the photovoltaic member 110 is inserted into the first overlapping member 150; and/or the photovoltaic member 110 is inserted into the second overlapping member 160.

In this embodiment, the photovoltaic member 110 is inserted into the first overlapping member 150, thereby improving the reliability of the connection between the photovoltaic member 110 and the first overlapping member 150. The photovoltaic member 110 is inserted into the second overlapping member 160, thereby improving the reliability of the connection between the photovoltaic member 110 and the second overlapping member 160 and reducing the possibility of the first overlapping member 150 and the second overlapping member 160 falling off.

As shown in FIG. 1, FIG. 2, and FIG. 9, the photovoltaic assembly 100 according to the present disclosure includes the photovoltaic member 110. The first mounting base 130 and the second mounting base 140 are mounted at the first side edge 112 of the photovoltaic member 110. The first mounting base 130 is fixed on the photovoltaic member 110 through a fourth screw 230. The first mounting base 130 and the second mounting base 140 are fixed through the first screw 180. The second mounting base 140 can be fixed to the keel 310 through the third screw 220.

The first overlapping member 150 is disposed at the second side edge 114 of the photovoltaic member 110, and the second overlapping member 160 is disposed at the third side edge 116 of the photovoltaic member 110. The first overlapping member 150 and the second overlapping member 160 of the adjacent photovoltaic assembly 100 are engaged with each other. The pressing plate 170 is disposed at the first overlapping member 150. The pressing plate 170 presses and covers the second overlapping member 160 of another photovoltaic assembly 100. The pressing plate 170 can be disassembled separately for easy maintenance of the photovoltaic assembly 100.

Referring to FIG. 4, the flexible waterproof member 190 is disposed at the light-receiving side 120 of the photovoltaic member 110, and the adjacent two photovoltaic assemblies 100 are overlapped and engaged with each other through the waterproof member 190, so as to avoid damage caused by rigid contact between two photovoltaic assemblies 100, and the waterproof member 190 has a certain waterproof function.

As shown in FIG. 1, FIG. 2, and FIG. 9, the photovoltaic assembly 100 includes the photovoltaic member 110, the first mounting base 130, and the second mounting base 140. The flexible gasket 200 is arranged between the first mounting base 130 and the photovoltaic member 110 and is configured to protect the photovoltaic member 110, thereby reducing the possibility of damaging the photovoltaic member 110. The photovoltaic member 110 and the first mounting base 130 are fixed through the fourth screw 230. The first mounting base 130 and the second mounting base 140 are fixed through the first screw 180. The second mounting base 140 includes the hook portion 148 configured to clamp the keel 310, thereby improving the stability of the photovoltaic assembly 100. Further, the photovoltaic assembly 100 can be conveniently positioned and mounted on a roof with a large slope. The photovoltaic member 110 and the first mounting base 130 are fixed through the fourth screw 230, and the fourth screw 230 can be a clamping plate screw.

As shown in FIG. 4, the waterproof member 190 is disposed at an upper edge of the light-receiving side 120 of the photovoltaic member 110, and the waterproof member 190 plays a waterproof role and can avoid damage caused by direct contact between adjacent photovoltaic assemblies 100.

As shown in FIG. 5, FIG. 6, and FIG. 7, the photovoltaic assembly 100 further includes the first overlapping member 150 disposed at the second side edge 114 of the photovoltaic member 110 and the second overlapping member 160 disposed at the third side edge 116 of the photovoltaic member 110. The pressing plate 170 is disposed at the first overlapping member 150. The first overlapping member 150 and the pressing plate 170 are fixed through the second screw 210. The first overlapping member 150 and the photovoltaic member 110 can be fixed through an adhesive, and the second overlapping member 160 and the photovoltaic member 110 can be fixed through an adhesive.

As shown in FIG. 1, in some embodiments, the photovoltaic member 110 is a curved structure, and the photovoltaic member 110 may be an arc-shaped structure or a wavy shape formed by a plurality of arc-shaped structures. The first side edge 112 and the fourth side edge 118 are curved side edges of the photovoltaic member 110, and the second side edge 114 and the third side edge 116 are straight edges of the photovoltaic member 110.

The photovoltaic assembly 100 may be a photovoltaic tile or a photovoltaic curtain wall.

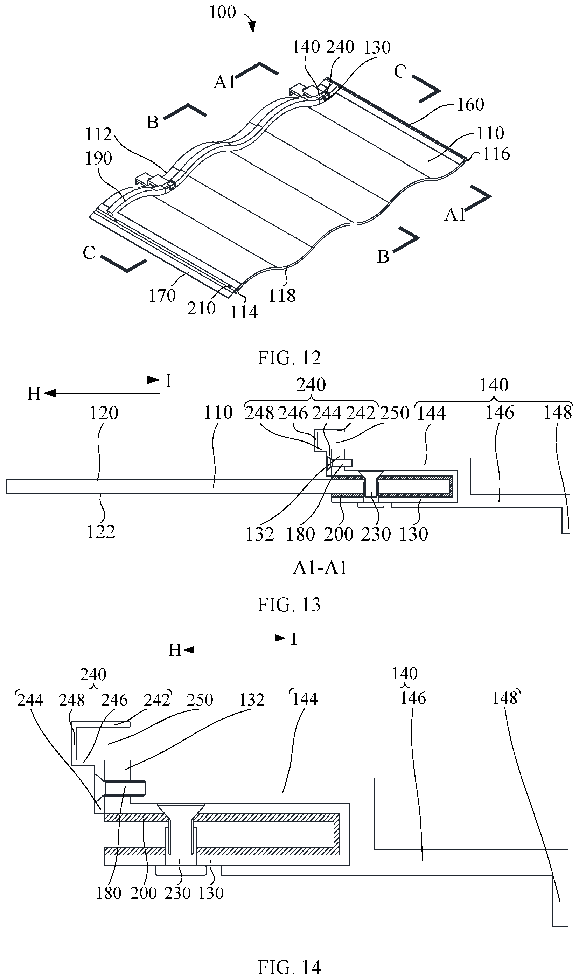

As shown in FIG. 12 to FIG. 14, a second aspect of the present disclosure further provides a photovoltaic assembly 100, which is basically the same as the photovoltaic assembly 100 of the first aspect, except that the photovoltaic assembly 100 of the second aspect further includes a connector 240. The connector 240 is disposed at the first mounting base 130 or the second mounting base 140. The connector 240 includes a pressing arm 242 configured to press and cover another photovoltaic member 110. When two photovoltaic members 110 are mounted, the pressing arm 242 presses and covers the other photovoltaic member 110, thereby improving the stability of the photovoltaic member 110 and reducing the possibility that the photovoltaic member 110 is lifted by wind.

When a plurality of first mounting bases 130 and a plurality of second mounting bases 140 are provided, the connector 240 can be disposed at each first mounting base 130 or each second mounting base 140, or the connector 240 can be disposed at some of the first mounting bases 130 or the second mounting bases 140.

As shown in FIG. 13, FIG. 14, FIG. 16, and FIG. 17, in some embodiments, the connector 240 is detachably disposed at the first mounting base 130 and located at a side of the first mounting base 130 away from the second mounting base 140. The photovoltaic assembly 100 further includes a first screw 180. The connector 240 and the first mounting base 130 are connected to and engaged with each other through the first screw 180.

In this embodiment, the connector 240 is detachably disposed at the first mounting base 130, and the connector 240 is located at the side of the first mounting base 130 away from the second mounting base 140. In this way, after the photovoltaic member 110 is mounted, another photovoltaic member 110 can overlap the first mounting base 130 or the second mounting base 140, reducing the force applied to the connector 240, thereby reducing the possibility of the connector 240 falling off.

The photovoltaic assembly 100 further includes the first screw 180. The connector 240 and the first mounting base 130 are connected to and engaged with each other through the first screw 180, thereby facilitating disassembly, maintenance, replacement, etc. of the connector 240. In an exemplary embodiment of the present disclosure, the connector 240 has a through hole. The first screw 180 passes through the connector 240 and is screwed to the first mounting base 130. The first screw 180 passes through the connector 240 and is screwed to the second mounting base 140. In another exemplary embodiment of the present disclosure, the connector 240, the extrusion 132, and the second mounting base 140 are connected to and engaged with each other through the first screw 180. The first screw 180 passes through the connector 240 and the extrusion 132 and is screwed to the second mounting base 140.

The connector 240, the first mounting base 130, and the second mounting base 140 are fixed through the same first screw 180, and therefore, disassembly steps or mounting steps of the connector 240, the first mounting base 130, and the second mounting base 140 are reduced, and the production efficiency is improved.

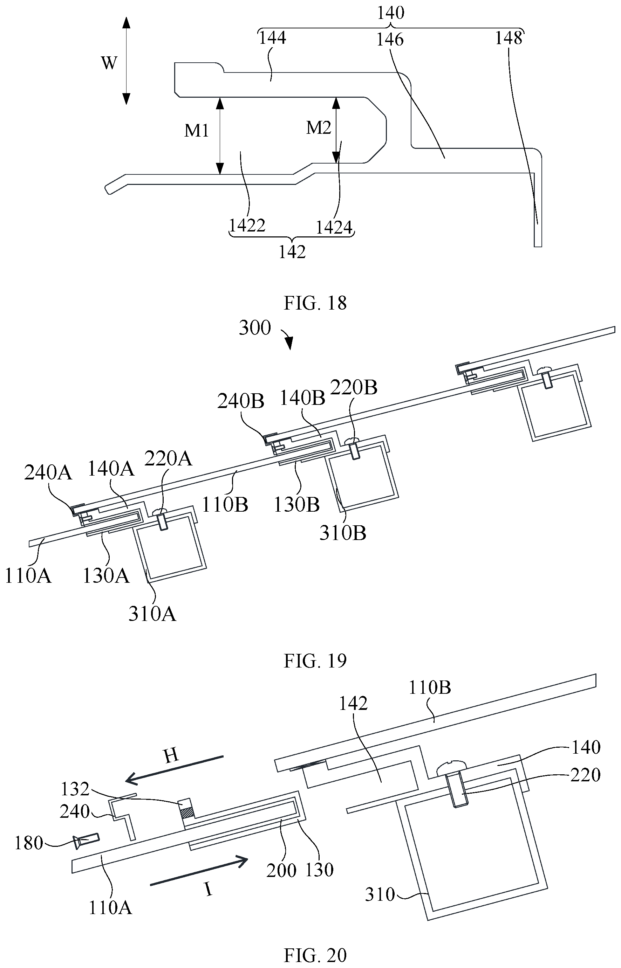

In addition, after the plurality of photovoltaic members 110 is distributed and mounted in an array structure, if one photovoltaic member 110 is to be disassembled, the connector 240, the first mounting base 130, and the second mounting base 140 can be disassembled, so that one photovoltaic member 110 can be disassembled separately, thereby facilitating maintenance and repair of the photovoltaic member 110. In an exemplary embodiment of the present disclosure, as shown in FIG. 20, one photovoltaic member 110A is pressed by another photovoltaic member 110B, the first screw 180 can withdraw from the second mounting base 140, the first mounting base 130, and the connector 240 in the direction H from the first side edge 112 to the fourth side edge 118. The first screw 180 can be inserted into the connector 240 and the first mounting base 130 in the direction I from the fourth side edge 118 to the first side edge 112 and screwed into the second mounting base 140. After the first screw 180 is disassembled, the connector 240 can be disassembled. The first mounting base 130 can be withdrawn from the mounting groove 142 of the second mounting base 140 in the direction H from the first side edge 112 to the fourth side edge 118, and the first mounting base 130 can be inserted into the mounting groove 142 of the second mounting base 140 in the direction I from the fourth side edge 118 to the first side edge 112. Such a disassembly and mounting method eliminates the need to adjust the photovoltaic member 110B and facilitates independent disassembly and maintenance of the photovoltaic member 110.

As shown in FIG. 13, FIG. 14, FIG. 16, and FIG. 17, in some embodiments, the connector 240 further includes a fixing plate 244, a first connecting plate 246, and a second connecting plate 248. The fixing plate 244 is connected to the first mounting base 130 or the second mounting base 140. The first connecting plate 246 is disposed on a side of the fixing plate 244 away from the second mounting base 140. The second connecting plate 248 is disposed on the first connecting plate 246. The pressing arm 242 is disposed at the second connecting plate 248. An accommodation groove 250 is enclosed by the first connecting plate 246, the second connecting plate 248, and the pressing arm 242. The accommodation groove 250 is configured to accommodate another photovoltaic member 110.

In this embodiment, the connector 240 further includes the fixing plate 244, the first connecting plate 246, and the second connecting plate 248. The fixing plate 244, the first connecting plate 246, the second connecting plate 248, and the pressing arm 242 are connected in sequence. The fixing plate 244 is connected to the first mounting base 130 or the second mounting base 140. The accommodation groove 250 is enclosed by the first connecting plate 246, the second connecting plate 248, and the pressing arm 242. The accommodation groove 250 is configured to accommodate another photovoltaic member 110. The pressing arm 242 limits the movement of the other photovoltaic member 110, and the connector 240 of the above structure has a simple structure, and, with less material consumption, contributes to cost reduction.

In an exemplary embodiment of the present disclosure, the connector 240 may be a sheet metal member or an injection molded member. The first screw 180 passes through the fixing plate 244.

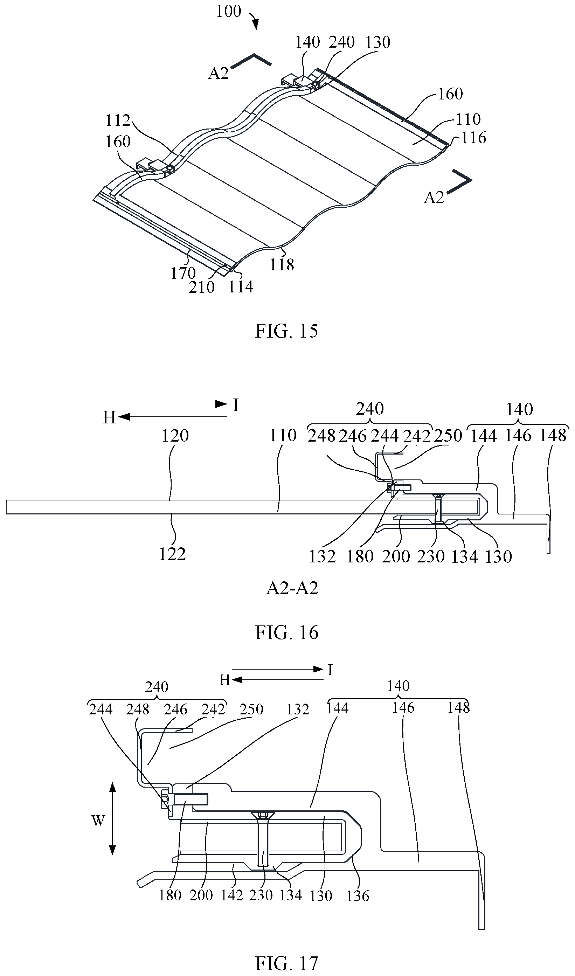

As shown in FIG. 14 and FIG. 17, in some embodiments, a length of the first connecting plate 246 is smaller than a length of the pressing arm 242 in the direction I from the fourth side edge 118 to the first side edge 112. In this embodiment, in the direction I from the fourth side edge 118 to the first side edge 112, the length of the first connecting plate 246 is smaller than the length of the pressing arm 242, thereby increasing a contact area of the pressing arm 242 and the other photovoltaic member 110 and increasing the fixing effect on the other photovoltaic member 110.

As shown in FIG. 12 and FIG. 15, in some embodiments, at least one connector 240 is provided, and when at least two connectors 240 are provided, at least two connectors 240 are spaced apart from each other.

In this embodiment, one, two, or more connectors 240 are provided, and when at least two connectors 240 are provided, at least two connectors 240 are spaced apart from each other. In an exemplary embodiment of the present disclosure, the number of connectors 240 can be determined based on actual requirements, and optionally, the length of the connector 240 from the second side edge 114 to the third side edge 116 can be determined based on actual requirements.

As shown in FIG. 18, in some embodiments, the mounting groove 142 includes a first section 1422 and a second section 1424. The first section 1422 and the second section 1424 are distributed in the direction from the fourth side edge 118 to the first side edge 112. In a direction W from the pressing arm 242 to the first mounting base 130, a height M1 of the first section 1422 is greater than a height M2 of the second section 1424. The first mounting base 130 includes a boss 134. The boss 134 is located in the second section 1424 when the first mounting base 130 is inserted into the mounting groove 142.

In this embodiment, the mounting groove 142 includes the first section 1422 and the second section 1424. The first section 1422 and the second section 1424 are in communication with each other and distributed in the direction from the fourth side edge 118 to the first side edge 112. That is, during an insertion of the first mounting base 130 into the mounting groove 142, the first section 1422 is entered first and then the second section 1424 is entered, and in the direction W from the pressing arm 242 to the first mounting base 130, the height M1 of the first section 1422 is greater than the height M2 of the second section 1424. In this way, during the insertion of the first mounting base 130 into the mounting groove 142, the first mounting base 130 first enters the first section 1422 with a higher height, thereby facilitating the insertion of the first mounting base 130 and increasing the tolerance in a production process of the photovoltaic assembly 100 to reduce production costs.

Referring to FIG. 16 and FIG. 17, the first mounting base 130 includes the boss 134. After the first mounting base 130 is inserted into the mounting groove 142, the boss 134 is located in the second section 1424. In this way, the first section 1422 is supported by the boss 134, thereby improving the stability of the first mounting base 130 and the second mounting base 140.

The first section 1422 and the second section 1424 can form a trumpet-shaped structure. Thus, the tolerance can be increased during mounting, and it is more convenient to disassemble the first mounting base 130 and the second mounting base 140.

As shown in FIG. 17, in some embodiments, the photovoltaic assembly 100 further includes a fourth screw 230 configured to fix the first mounting base 130 and the photovoltaic member 110. The fourth screw 230 is engaged with the boss 134.

In this embodiment, the photovoltaic assembly 100 further includes the fourth screw 230 configured to fix the first mounting base 130 and the photovoltaic member 110. The fourth screw 230 is engaged with the boss 134, thereby increasing a connection length between the fourth screw 230 and the first mounting base 130 and improving the connection strength between the first mounting base 130 and the photovoltaic member 110.

The photovoltaic member 110 and the first mounting base 130 can be fixed through the fourth screw 230, and the second mounting base 140 can be fixed to the keel 310 through the third screw 220.

As shown in FIG. 17, in some embodiments, the first mounting base 130 has a guide slope 136 at an end capable of being inserted into the mounting groove 142. In this embodiment, the end of the first mounting base 130 capable of being inserted into the mounting groove 142 has the guide slope 136, thereby providing guidance for the mounting of the first mounting base 130 and the second mounting base 140 and reducing difficulty in assembling the first mounting base 130 and the second mounting base 140. The first mounting base 130 and the second mounting base 140 can be detached separately, and the guide slope 136 is disposed at the first mounting base 130, which can increase the mounting tolerance and facilitate later maintenance.

After the plurality of photovoltaic members 110 is mounted in an array structure, if one photovoltaic member 110 is to be disassembled, the connector 240, the first mounting base 130 and the second mounting base 140 can be disassembled, and the pressing plate 170 of the other photovoltaic member 110 can be disassembled, so that one photovoltaic member 110 can be disassembled independently, thereby facilitating the maintenance and repair of the photovoltaic member 110.

As shown in FIG. 8, FIG. 9, FIG. 19, FIG. 20, FIG. 10, and FIG. 11, a third aspect of the present disclosure provides a photovoltaic device 300. The photovoltaic device 300 includes at least one keel 310 and at least one photovoltaic assembly 100 (shown in FIG. 8 and FIG. 9) provided in the first aspect of the embodiments or at least one photovoltaic assembly 100 (shown in FIG. 19 and FIG. 20) provided in the second aspect of the embodiments. The second mounting base 140 of the photovoltaic assembly 100 is connected to the keel 310.

The photovoltaic device 300 according to the present disclosure includes at least one keel 310 and at least one photovoltaic assembly 100 provided in the first aspect of the embodiments or at least one photovoltaic assembly 100 provided in the second aspect of the embodiments. The second mounting base 140 of the photovoltaic assembly 100 is connected to the keel 310. The photovoltaic device 300 according to the present disclosure includes the photovoltaic assembly 100 provided in the first aspect of the embodiments, therefore the photovoltaic device 300 has all the beneficial effects of the photovoltaic assembly 100 provided in the first aspect of the embodiments or has all the beneficial effects of the photovoltaic assembly 100 provided in the second aspect of the embodiments, which is not be described herein.

As shown in FIG. 8 or FIG. 19, the photovoltaic device 300 includes a plurality of photovoltaic assemblies 100. One photovoltaic assembly 100 includes a photovoltaic member 110A, a first mounting base 130A, and a second mounting base 140A. The second mounting base 140A is fixed on the keel 310A through a third screw 220A. Another photovoltaic assembly 100 includes a photovoltaic member 110B, a first mounting base 130B, and a second mounting base 140B. The second mounting base 140B is fixed to the keel 310B through a third screw 220B. The photovoltaic member 110B overlaps a waterproof member 190 on the photovoltaic member 110A.

As shown in FIG. 10, the second overlapping member 160 is disposed at the third side edge 116 of the photovoltaic member 110A of one photovoltaic assembly 100. The first overlapping member 150 is disposed at the second side edge 114 of the photovoltaic member 110C of the other photovoltaic assembly 100. The pressing plate 170 on the first overlapping member 150 presses and covers the second overlapping member 160 of the other photovoltaic assembly 100.

As shown in FIG. 9 or FIG. 20, when disassembly is required, the first screw 180 can be disassembled, and then the photovoltaic member 110A and the first mounting base 130 can be disassembled in the direction H (the connector 240 can also be disassembled if connector 240 is provided). As shown in FIG. 11, the second screw 210 can be disassembled, and the pressing plate 170 can be disassembled. In this way, the second overlapping member 160 of the photovoltaic member 110A and the first overlapping member 150 of the photovoltaic member 110B do not interfere with each other, thereby realizing the separate disassembly of one photovoltaic assembly 100. Similarly, the separate mounting of one photovoltaic assembly 100 can be realized, that is, after the photovoltaic assembly 100 is mounted. The first mounting base 130 and the second mounting base 140 are fixed through the first screw 180, and the pressing plate 170 and the first overlapping member 150 are fixed through the second screw 210.

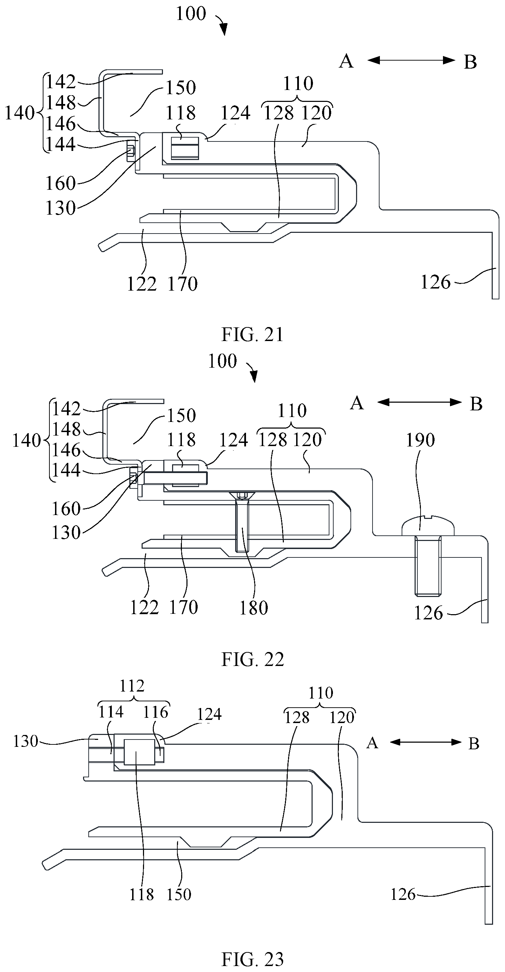

The mounting assembly 100 and the photovoltaic device 200 provided in accordance with some embodiments of the present disclosure are described below with reference to FIG. 21 to FIG. 29.

As shown in FIG. 21 to FIG. 24, according to a fourth aspect of the present disclosure, the present disclosure provides a mounting assembly 100 including a mounting base 110, a connector 140, and a fastener 160. The mounting base 110 is configured to mount a photovoltaic member 210. The mounting base 110 includes a mounting hole 112 and an avoidance hole 118. The mounting hole 112 is in communication with the avoidance hole 118. The connector 140 includes a pressing arm 142 configured to press and cover another photovoltaic member 210. The fastener 160 is disposed in the mounting hole 112 and passes through the avoidance hole 118. The avoidance hole 118 is configured to avoid the fastener 160, and the fastener 160 is configured to fix the connector 140 on the mounting base 110.

The mounting assembly 100 according to the present disclosure includes the mounting base 110, the connector 140, and the fastener 160. The fastener 160 is configured to fix the connector 140 on the mounting base 110. The mounting base 110 can be provided with a photovoltaic member 210. The connector 140 includes the pressing arm 142, and the pressing arm 142 presses on another photovoltaic member 210. After a plurality of photovoltaic members 210 are mounted, the fixation of the front and rear sides can be formed, thereby improving the stability of the photovoltaic member 210, and improving the windproof performance of the photovoltaic member 210.

The mounting base 110 includes the mounting hole 112 and the avoidance hole 118. The mounting hole 112 and the avoidance hole 118 are in communication with each other. The fastener 160 is disposed in the mounting hole 112 and passes through the avoidance hole 118. The avoidance hole 118 can avoid the fastener 160, that is, the avoidance hole 118 does not need to be threaded, thereby reducing the threading depth of the mounting base 110, reducing the threading resistance, reducing the processing difficulty of the mounting assembly 100, and reducing production costs.

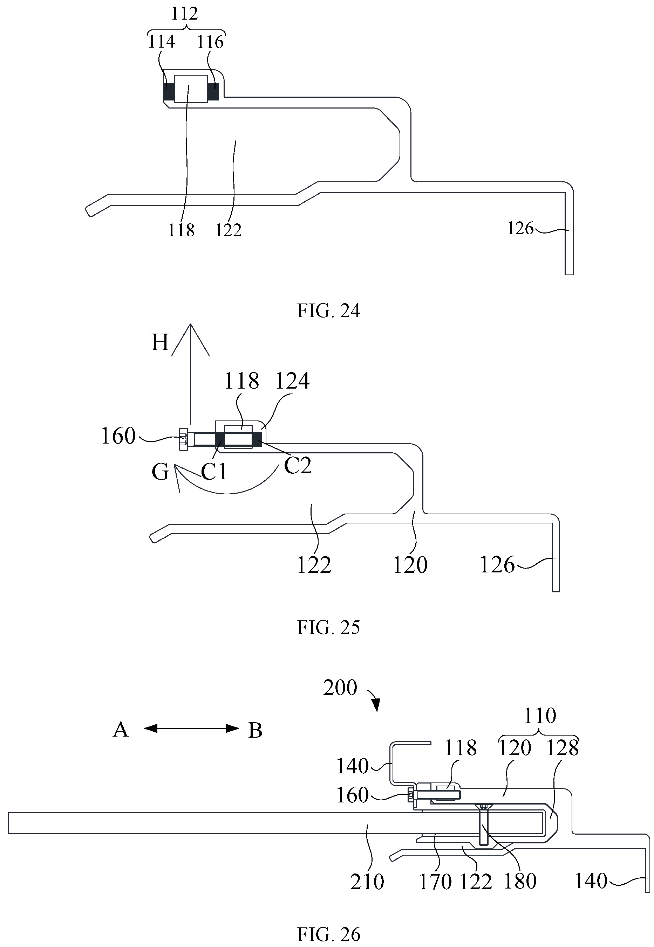

As shown in FIG. 23 and FIG. 24, in some embodiments, the mounting hole 112 includes a first mounting hole 114 and a second mounting hole 116. The avoidance hole 118 is located between the first mounting hole 114 and the second mounting hole 116. The fastener 160 is disposed in the first mounting hole 114 and the second mounting hole 116.

In this embodiment, the mounting hole 112 includes a first mounting hole 114 and a second mounting hole 116. The avoidance hole 118 is formed between the first mounting hole 114 and the second mounting hole 116. The fastener 160 is disposed at the first mounting hole 114 and the second mounting hole 116. That is, the fastener 160 is connected to the mounting base 110 at both a front end and a rear end of the fastener 160, and a middle of the fastener 160 is in a free state. In this way, the stability of the fastener 160 is ensured, and the possibility of rattling of an end portion of the fastener 160 is reduced.

As shown in FIG. 25, a force direction of the other photovoltaic member 210 on the fastener 160 is H, and a torsion direction is G. A front fulcrum C1 and a rear fulcrum C2 on the fastener 160 and the mounting base 110 form a resisting force arm, which can well resist the torsion generated by the force.

As shown in FIG. 21 to FIG. 25, in some embodiments, the avoidance hole 118 penetrates through the mounting base 110.

In this embodiment, the avoidance hole 118 passes through the mounting base 110 to form a hollow structure, thereby reducing the difficulty of machining the avoidance hole 118 and reducing the production cost of the mounting assembly 100.

As shown in FIG. 21 to FIG. 25, in some embodiments, the mounting hole 112 is a screw hole. The fastener 160 is a bolt, or the fastener 160 is a self-tapping screw.

In this embodiment, the mounting hole 112 is the screw hole, and the fastener 160 is the bolt. That is, it is necessary to thread the mounting hole 112 separately, and then screw the fastener 160 into the mounting hole 112, so as to reduce the difficulty of field mounting and facilitate the disassembly and maintenance of the mounting assembly 100 or the photovoltaic member 210.

In an exemplary embodiment of the present disclosure, the avoidance hole 118 may have a hollow structure, and the first mounting hole 114 and the second mounting hole 116 are arranged on two layers of the avoidance hole 118, so as to reduce the threading depth, reduce the resistance, and reduce the processing difficulty. The fastener 160 is screwed to the first mounting hole 114 and the second mounting hole 116, which can enhance the anti-torsion performance of the connector 140, improve the bearing capacity of the connector 140, and improve the windproof performance of the mounting assembly 100.

Alternatively, the fastener 160 is the self-tapping screw, and it is not required to thread the mounting hole 112 separately, thereby reducing the processing steps of the mounting assembly 100 and further saving the production cost.

In an exemplary embodiment of the present disclosure, the avoidance hole 118 may have a hollow structure, and the first mounting hole 114 and the second mounting hole 116 are formed on two layers of the avoidance hole 118. In this way, the resistance of the fastener 160 is reduced, and the processing difficulty is reduced. The fastener 160 is screwed to the first mounting hole 114 and the second mounting hole 116, which can enhance the anti-torsion performance of the connector 140, improve the bearing capacity of the connector 140, and improve the windproof performance of the mounting assembly 100.

As shown in FIG. 21 to FIG. 25, in some embodiments, the fastener 160 is spaced from a wall of the avoidance hole 118.

In this embodiment, the fastener 160 and the wall of the avoidance hole 118 are spaced apart from each other, thereby reducing the likelihood of interference between the fastener 160 and the wall of the avoidance hole 118.

As shown in FIG. 21 to FIG. 23, in some embodiments, the mounting base 110 includes the first mounting base 120 and the second mounting base 128. The first mounting base 120 includes the mounting groove 122. The second mounting base 128 is detachably disposed in the mounting groove 122. The second mounting base 128 can withdraw from the mounting groove 122 in a first direction BA, and can be inserted into the mounting groove 122 in a second direction AB. The first direction BA is opposite to the second direction AB. The second mounting base 128 is configured to be connected to the photovoltaic member 210. The first mounting hole 114 is located at the first mounting base 120 and the second mounting base 128, and the avoidance hole 118 is located at the second mounting base 128.

In this embodiment, the mounting base 110 includes the first mounting base 120 and the second mounting base 128. The first mounting base 120 and the second mounting base 128 are detachably engaged with each other. The first mounting base 120 has the mounting groove 122 thereon. The second mounting base 128 is disposed in the mounting groove 122. The first mounting base 120 can engage with the keel 220 to fix the photovoltaic member 210 to the keel 220. When the plurality of photovoltaic members 210 is mounted on the keel 220, the second mounting base 128 needs not be disassembled, and only the first mounting base 120 needs to be disassembled.

Further, the first mounting base 120 includes the mounting groove 122, and the second mounting base 128 is detachably inserted into the mounting groove 122, thereby improving the reliability of the first mounting base 120 and the second mounting base 128. When two photovoltaic members 210 are stacked and engaged with each other, one photovoltaic member 210 is placed on the mounting base 110 of the other photovoltaic member 210. Therefore, the second mounting base 128 is configured to withdraw from the mounting groove 122 in the first direction BA, and the second mounting base 128 is configured to be inserted into the mounting groove 122 in the second direction AB, thereby facilitating disassembly of the photovoltaic member 210 and facilitating the maintenance and repair of the photovoltaic member 210.

After the plurality of photovoltaic members 210 is mounted in an array structure, if one photovoltaic member 210 is to be disassembled, the first mounting base 120 and the second mounting base 128 can be disassembled, so that one photovoltaic member 210 can be disassembled separately, thereby facilitating the maintenance and repair of the photovoltaic member 210.

In addition, the first mounting hole 114 is located at the first mounting base 120 and the second mounting base 128, and the avoidance hole 118 is located at the second mounting base 128. Therefore, not only the connector 140 and the mounting base 110 but also the first mounting base 120 and the second mounting base 128 can be fastened through the fastener 160, thereby reducing assembly steps of the mounting assembly 100 and improving the mounting efficiency of the photovoltaic member 210.

As shown in FIG. 21 to FIG. 25, in some embodiments, the first mounting base 120 includes a first protrusion 124. At least a part of the mounting hole 112 is formed at the first protrusion 124. In this embodiment, the first mounting base 120 includes the first protrusion 124, and at least a part of the mounting hole 112 is formed at the first protrusion 124. That is, the fastener 160 is adapted to a part of the first protrusion 124, thereby reducing a material consumption of the mounting base 110 and reducing the production cost.

In an exemplary embodiment of the present disclosure, the first mounting base 120 is thinned to allow the first protrusion 124 to protrude. The first protrusion 124 is threaded, and the avoidance hole 118 is formed. Therefore, the resistance of threading can be reduced, the threading can be completed by a conventional process, reducing the processing cost and production cost.

As shown in FIG. 21 to FIG. 23, in some embodiments, the second mounting base 128 includes a second protrusion 130. At least a part of the mounting hole 112 is formed at the second protrusion 130, and at least a part of the avoidance hole 118 is formed at the second protrusion 130.

In this embodiment, the second mounting base 128 includes a second protrusion 130, at least a part of the mounting hole 112 is disposed on the second protrusion 130, and at least a part of the avoidance hole 118 is disposed on the second protrusion 130. That is, the fastener 160 is adapted to a part of the local second protrusion 130, thereby reducing the material consumption of the mounting base 110 and reducing the production cost.

As shown in FIG. 21 and FIG. 22, in some embodiments, the connector 140 further includes a fixing plate 144, a first connecting plate 146, and a second connecting plate 146. The fixing plate 144 is connected to the mounting base 110. The first connecting plate 146 is disposed on a side of the fixing plate 144 away from the mounting base 110. The second connecting plate 148 is disposed on the first connecting plate 146. The pressing arm 142 is disposed at the second connecting plate 148. An accommodation groove 150 is enclosed by the first connecting plate 146, the second connecting plate 148, and the pressing arm 142. The accommodation groove 150 is configured to accommodate another photovoltaic member 210.

In this embodiment, the connector 140 further includes the fixing plate 144, the first connecting plate 146, and the second connecting plate 148. The fixing plate 144, the first connecting plate 146, the second connecting plate 148, and the pressing arm 142 are connected in sequence. The fixing plate 144 is connected to the first mounting base 120 or the second mounting base 128. The accommodation groove 150 is enclosed by the first connecting plate 146, the second connecting plate 148, and the pressing arm 142. The accommodation groove 150 is configured to accommodate another photovoltaic member 210. The pressing arm 142 limits the movement of the other photovoltaic member 210. The connector 140 with the above structure has a simple structure and less material consumption, which is beneficial to reducing cost.

As shown in FIG. 21 and FIG. 22, in some embodiments, the mounting assembly 100 further includes a flexible member 170. The flexible member 170 is disposed at the mounting base 110, and is arranged between the mounting base 110 and the photovoltaic member 210. In this embodiment, the likelihood of damage to the photovoltaic member 210 is reduced by spacing the photovoltaic member 210 from the mounting base 110 through the flexible member 170.

As shown in FIG. 22, in some embodiments, the mounting assembly 100 further includes a first bolt 180. The first bolt 180 is disposed at the second mounting base 128, and passes through the photovoltaic member 210.

In this embodiment, the photovoltaic member 210 is fixed to the second mounting base 128 through the first bolt 180, which reduces the difficulty of fixing the photovoltaic member 210, improves the stability of the photovoltaic member 210, and facilitates the disassembly and maintenance of the photovoltaic member 210.

As shown in FIG. 22, in some embodiments, the mounting assembly 100 further includes a second bolt 190. The second bolt 190 is disposed at the mounting base 110, and is configured to fix the mounting base 110 on the keel 220. In this embodiment, the mounting assembly 100 is fixed to the keel 220 through the second bolt 190, which facilitates disassembly and maintenance of the mounting assembly 100.

As shown in FIG. 21 to FIG. 25, in some embodiments, the mounting base 110 has a hook 126 configured to clamp the keel 220. In this embodiment, the mounting base 110 has the hook 126 configured to clamp the keel 220 to realize positioning of the mounting assembly 100, thereby reducing the difficulty of positioning the mounting assembly 100, and ensuring that the mounting assemblies 100 in the same row are located at the same horizontal line.

As shown in FIG. 26, according to a fifth aspect of the present disclosure, the present disclosure provides a photovoltaic device 200. The photovoltaic device 200 includes a photovoltaic member 210, and the mounting assembly 100 according to the fourth aspect of the embodiments. The photovoltaic member 210 is mounted at the mounting assembly 100.

The photovoltaic device 200 according to the present disclosure includes the mounting assembly 100 according to the fourth aspect of the embodiments, therefore it has all the beneficial effects of the mounting assembly 100 according to the fourth aspect of the embodiments, which will not be described in detail herein.

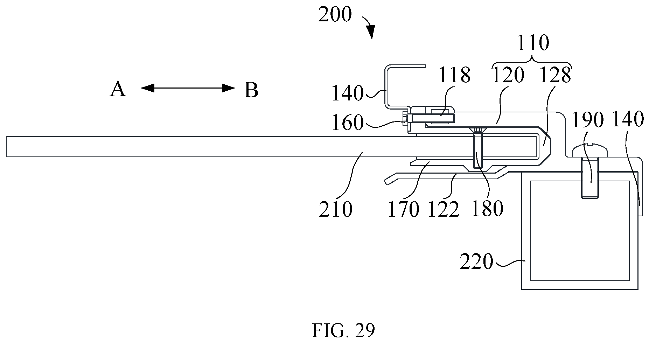

As shown in FIG. 29, in some embodiments, the photovoltaic device 200 further includes a keel 220. The mounting assembly 100 is mounted at the keel 220 through the second bolt 190. A plurality of keels 220 engages with each other to allow the photovoltaic member 210 to present a laminated structure. The hook 126 on the mounting base 110 clamps the keel 220, allowing the photovoltaic members 210 in the same row to be all on the same horizontal line.

The photovoltaic device 200, the photovoltaic member 210, and the mounting assembly 100 are provided according to the present disclosure. The mounting assembly 100 includes the first mounting base 120 and the second mounting base 128. The flexible member 170 is disposed at the second mounting base 128, and the photovoltaic member 210 is disposed at the flexible member 170. That is, the flexible member 170 is arranged between the second mounting base 128 and the photovoltaic member 210, reducing the possibility of damage to the photovoltaic member 210. The photovoltaic member 210 and the second mounting base 128 are locked and fixed through the first bolt 180. The first mounting base 120 has the mounting groove 122, and the second mounting base 128 is detachably disposed in the mounting groove 122. The connector 140 is disposed at an end of the second mounting base 128. The connector 140, the first mounting base 120, and the second mounting base 128 are fixed through the fastener 160, which is convenient for positioning and mounting in roof construction with a large slope.

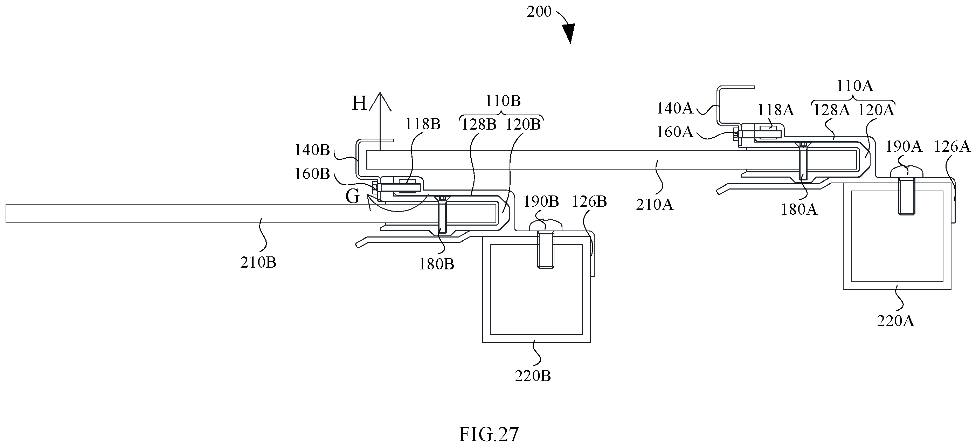

In an exemplary embodiment of the present disclosure, as shown in FIG. 27, the photovoltaic device 200 includes at least two photovoltaic members 210A, at least two mounting assemblies 100, and at least two keels 220A. The photovoltaic member 210A is mounted at a mounting assembly 100A through a first bolt 180A. The mounting assembly 100A is mounted at a keel 220A through a second bolt 190A. A hook 126A of the mounting assembly 100A clamps the keel 220A. The mounting assembly 100A includes a mounting base 110A, and the mounting base 110A includes a first mounting base 120A and a second mounting base 128A. The second mounting base 128A is inserted into the first mounting base 120A. A connector 140A is fixed on the first mounting base 120A and the second mounting base 128A through a fastener 160A. The second mounting base 128A has an avoidance hole 118A, and the fastener 160A passes through the avoidance hole 118A, thus reducing the difficulty of machining the mounting base 110A.

A photovoltaic member 210B is mounted on the mounting assembly 100 through a first bolt 180B. The mounting assembly 100 is mounted on a keel 220B through a second bolt 190B. A hook 126B of the mounting assembly 100 clamps the keel 220B. The mounting assembly 100 includes a mounting base 110B, and the mounting base 110B includes a first mounting base 120B and a second mounting base 128B. The second mounting base 128B is inserted into the first mounting base 120B. A connector 140B is fixed on the first mounting base 120B and the second mounting base 128B through a fastener 160B. The second mounting base 128B has an avoidance hole 118B, and the fastener 160B passes through the avoidance hole 118B, thus reducing the difficulty of machining the mounting base 110B.

The photovoltaic member 210A presses the mounting base 110B of the mounting assembly 100, and the connector 140B of the mounting assembly 100 presses the photovoltaic member 210A. The photovoltaic member 210A is affected by wind and the like, and generates a force acting on the connector 140B, as shown in FIG. 27, and its direction is H. Since there is a certain distance between the connector 140B and the mounting base 110B, the acting force will generate a certain torque, as shown in FIG. 27, and its direction is G. Therefore, the connection between the fastener 160B and the mounting base 110B should have a sufficient depth to resist the torsion, and the cost of machining a screw hole with a large depth is relatively high. The present disclosure utilizes the avoidance hole 118B to reduce the machining depth of the mounting hole 112 and reduce the production cost.

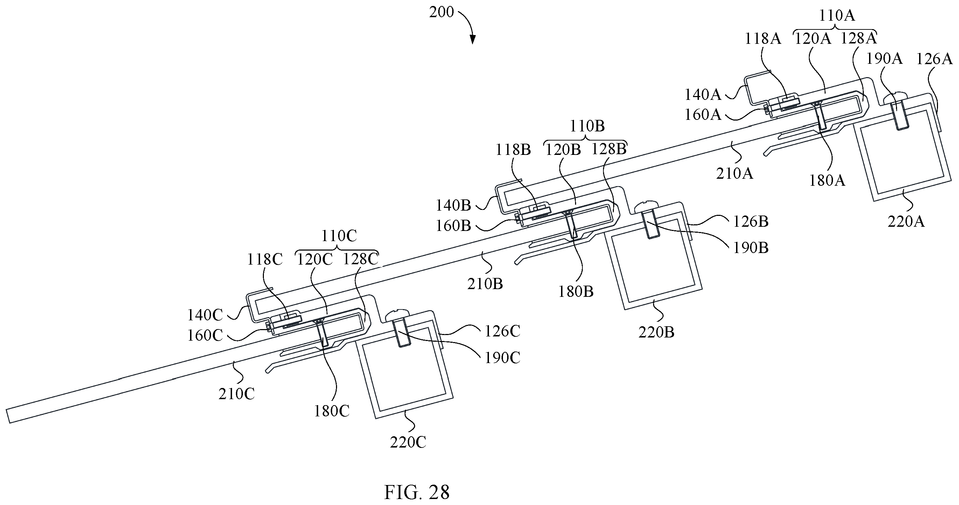

In an exemplary embodiment of the present disclosure, as shown in FIG. 28, the photovoltaic member 210 is mounted on the mounting assembly 100 through the first bolt 180A. The mounting assembly 100 is mounted on the keel 220A through the second bolt 190A. The hook 126A of the mounting assembly 100 clamps the keel 220A. The mounting assembly 100 includes the mounting base 110A. The mounting base 110A includes the first mounting base 120A and the second mounting base 128A. The second mounting base 128A is inserted into the first mounting base 120A. The connector 140A is fixed on the first mounting base 120A and the second mounting base 128A through the fastener 160A. The second mounting base 128A has the avoidance hole 118A, and the fastener 160A passes through the avoidance hole 118A.

The photovoltaic member 210B is mounted on the mounting assembly 100 through the first bolt 180B. The mounting assembly 100 is mounted on the keel 220B through the second bolt 190B. The hook 126B of the mounting assembly 100 clamps the keel 220B. The mounting assembly 100 includes the mounting base 110B. The mounting base 110B includes the first mounting base 120B and the second mounting base 128B. The second mounting base 128B is inserted into the first mounting base 120B. The connector 140B is fixed on the first mounting base 120B and the second mounting base 128B through the fastener 160B. The second mounting base 128B has the avoidance hole 118B, and the fastener 160B passes through the avoidance hole 118B.

A photovoltaic member 210C is mounted on the mounting assembly 100 through a first bolt 180C. The mounting assembly 100 is mounted on a keel 220C through a second bolt 190C. A hook 126C of the mounting assembly 100 clamps the keel 220C. The mounting assembly 100 includes a mounting base 110C. The mounting base 110C includes a first mounting base 120C and a second mounting base 128C. The second mounting base 128C is inserted into the first mounting base 120C. The connector 140C is fixed on the first mounting base 120C and the second mounting base 128C through a fastener 160C. The second mounting base 128C has an avoidance hole 118C, and the fastener 160C passes through the avoidance hole 118C.

As described above, the plurality of photovoltaic members 210 is sequentially overlapped through the mounting assembly 100 to form an integrated structure.

The photovoltaic device 200 may be a photovoltaic tile or a photovoltaic curtain wall.

In this application, terms "first", "second", and "third" are only used for descriptive purposes, and cannot be understood as indicating or implying relative importance. Term "plurality" means two or more, unless otherwise specified defined. Terms such as "install", "connect", "fix", and the like should be understood in a broad sense. For example, "connect" may refer to a fixed connection or a detachable connection or a connection as one piece, and "connect" may refer to a direct connection or an indirect connection through an intermediate. For those skilled in the art, the specific meaning of the above-mentioned terms in the present disclosure can be understood according to specific circumstances.

In the description of the present disclosure, it should be understood that the orientation or position relationship indicated by the terms such as "upper", "lower", "left", "right", "front", "rear", and the like should be construed to refer to the orientation or the position as shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure.

In the description of this specification, description with reference to the terms "an embodiment", "some embodiments", "specific embodiments" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

While some embodiments of the present disclosure have been described above, the present disclosure is not limited to these embodiments. For those skilled in the art, various changes and variations can be made to the present disclosure. Any modification, equivalent substitution, improvement, etc., made within the spirit and principles of the present disclosure shall fall within the scope of the present disclosure.

## Claims

1. A photovoltaic assembly, comprising:
a photovoltaic member comprising a first side edge, a second side edge, a third side edge, and a fourth side edge, the second side edge and the third side edge being a pair of opposite side edges of the photovoltaic member, the first side edge and the fourth side edge being another pair of opposite side edges of the photovoltaic member, the first side edge being connected to one same side of the second side edge and the third side edge, and the fourth side edge being connected to another same side of the second side edge and the third side edge;
a first mounting base disposed at the photovoltaic member and located at the first side edge; and
a second mounting base having a mounting groove, the first mounting base being capable of being inserted into the mounting groove in a direction from the fourth side edge to the first side edge and being withdrawn from the mounting groove in a direction from the first side edge to the fourth side edge, and the second mounting base being detachably engaged with the first mounting base and configured to fix the photovoltaic assembly.

2. The photovoltaic assembly according to claim 1, wherein:
the first mounting base comprises a protrusion, the protrusion and the second mounting base being distributed in the direction from the fourth side edge to the first side edge; and
the photovoltaic assembly further comprises a first screw, the protrusion and the second mounting base being connected to and engaged with each other through the first screw.

3. The photovoltaic assembly according to claim 1, further comprising a connector disposed at the first mounting base or the second mounting base, the connector comprising a pressing arm configured to press and cover another photovoltaic member.

4. The photovoltaic assembly according to claim 3, wherein:
the connector is detachably disposed at the first mounting base and located at a side of the first mounting base away from the second mounting base; and
the photovoltaic assembly further comprises a first screw, the connector and the first mounting base being connected to and engaged with each other through the first screw.

5. The photovoltaic assembly according to claim 4, wherein:
the first mounting base comprises a protrusion, the protrusion and the second mounting base being distributed in the direction from the fourth side edge to the first side edge; and
the connector, the protrusion, and the second mounting base are connected to and engaged with each other through the first screw.

6. The photovoltaic assembly according to any one of claims 3 to 5, wherein the connector further comprises:
a fixing plate connected to the first mounting base or the second mounting base;
a first connecting plate disposed on a side of the fixing plate away from the second mounting base; and
a second connecting plate disposed on the first connecting plate, the pressing arm being disposed at the second connecting plate, an accommodation groove being enclosed by the first connecting plate, the second connecting plate, and the pressing arm, and the accommodation groove being configured to accommodate another photovoltaic member.

7. The photovoltaic assembly according to any one of claims 3 to 6, wherein:
the mounting groove comprises a first section and a second section, the first section and the second section being distributed in the direction from the fourth side edge to the first side edge, and the first section having a greater height than the second section in a direction from the pressing arm to the first mounting base; and
the first mounting base comprises a boss, the boss being located in the second section when the first mounting base is inserted in the mounting groove.

8. The photovoltaic assembly according to claim 7, further comprising a fourth screw configured to fix the first mounting base and the photovoltaic member, the fourth screw being engaged with the boss.

9. The photovoltaic assembly according to any one of claims 3 to 8, wherein the first mounting base has a guide slope at an end capable of being inserted into the mounting groove.

10. The photovoltaic assembly according to claim 2 or 5, further comprising:
a waterproof member disposed at a light-receiving side of the photovoltaic member, the waterproof member and the first mounting base being arranged side by side in a width direction of the photovoltaic member, and the waterproof member being located at a level higher than or same as the protrusion,
wherein when two photovoltaic assemblies are engaged with each other in the direction from the first side edge to the fourth side edge, the waterproof member of one of the two photovoltaic assemblies is pressed and covered by the photovoltaic member of the other one of the two photovoltaic assemblies.

11. The photovoltaic assembly according to claim 10, wherein the waterproof member comprises a rubber waterproof member and a silicone waterproof member.

12. The photovoltaic assembly according to any one of claims 1 to 11, wherein the second mounting base comprises:
a base body detachably connected to the first mounting base;
an extension portion disposed at a side of the base body away from the photovoltaic member and configured to fix the photovoltaic member; and
a hook portion disposed at the extension portion and protruding towards a backlight surface of the photovoltaic member.

13. The photovoltaic assembly according to any one of claims 1 to 12, further comprising a flexible gasket arranged between the photovoltaic member and the first mounting base, the photovoltaic member being embedded into the first mounting base.

14. The photovoltaic assembly according to claim 13, wherein the flexible gasket is made of rubber or silicone.

15. The photovoltaic assembly according to any one of claims 1 to 14, further comprising:
a first overlapping member disposed at the photovoltaic member and located at the second side edge;
a second overlapping member disposed at the photovoltaic member and located at the third side edge; and
a pressing plate detachably disposed at the first overlapping member, wherein
when two photovoltaic assemblies are engaged with each other in a direction from the second side edge to the third side edge, the pressing plate of one photovoltaic assembly presses and covers the second overlapping member of the other photovoltaic assembly.

16. The photovoltaic assembly according to claim 15, wherein the second overlapping member comprises a flow guiding groove, the pressing plate of one photovoltaic assembly presses and covers the flow guiding groove of the other photovoltaic assembly when two photovoltaic assemblies are engaged with each other in the direction from the second side edge to the third side edge.

17. The photovoltaic assembly according to claim 15 or 16, further comprising:
a second screw, wherein the first overlapping member and the pressing plate are connected to and engaged with each other through the second screw.

18. The photovoltaic assembly according to any one of claims 15 to 17, wherein
the photovoltaic member is inserted into the first overlapping member; and/or
the photovoltaic member is inserted into the second overlapping member.

19. A photovoltaic device, comprising:
at least one keel; and
at least one photovoltaic assembly according to any one of claims 1 to 18, wherein
the second mounting base of the photovoltaic assembly is connected to the keel.

20. A mounting assembly, comprising:
a mounting base configured to mount a photovoltaic member, the mounting base having a mounting hole and an avoidance hole, the mounting hole is in communication with the avoidance hole;
a connector comprising a pressing arm configured to press and cover another photovoltaic member;
a fastener disposed in the mounting hole and passing through the avoidance hole, the avoidance hole being configured to avoid the fastener, and the fastener being configured to fix the connector on the mounting base.

21. The mounting assembly according to claim 20, wherein the mounting hole comprises a first mounting hole and a second mounting hole, the avoidance hole being located between the first mounting hole and the second mounting hole, and the fastener being disposed in the first mounting hole and the second mounting hole.

22. The mounting assembly according to claim 20, wherein:
the avoidance hole penetrates through the mounting base.

23. The mounting assembly according to claim 20, wherein:
the mounting hole is a screw hole, and the fastener is a bolt; or
the fastener is a self-tapping screw.

24. The mounting assembly according to claim 20, wherein:
the fastener is spaced from a wall of the avoidance hole.

25. The mounting assembly according to any one of claims 20 to 24, wherein the mounting base comprises:
a first mounting base comprising a mounting groove;
a second mounting base detachably disposed in the mounting groove, wherein the second mounting base is capable of withdrawing from the mounting groove in a first direction, and capable of being inserted into the mounting groove in a second direction, the first direction is opposite to the second direction, the second mounting base is configured to be connected to the photovoltaic member, wherein
the avoidance hole is located at the second mounting base.

26. The mounting assembly according to claim 25, wherein the first mounting base comprises a first protrusion, at least a part of the mounting hole is formed at the first protrusion.

27. The mounting assembly according to claim 25, wherein the second mounting base comprises a second protrusion, at least a part of the mounting hole is formed at the second protrusion, and at least a part of the avoidance hole is formed at the second protrusion.

28. The mounting assembly according to any one of claims 20 to 25, wherein the connector further comprises:
a fixing plate connected to the mounting base;
a first connecting plate disposed on a side of the fixing plate away from the mounting base; and
a second connecting plate disposed on the first connecting plate, wherein the pressing arm is disposed at the second connecting plate; an accommodation groove is enclosed by the first connecting plate, the second connecting plate, and the pressing arm; the accommodation groove is configured to accommodate another photovoltaic member.

29. A photovoltaic device comprising:
a photovoltaic member; and
the mounting assembly according to any one of claims 20 to 28, wherein the photovoltaic member is mounted at the mounting assembly.
